# EUROPEAN PATENT APPLICATION

(11) **EP 1 726 779 A1**
(43) Date of publication of application: **29.11.2006**
(21) Application number: 05720759.9
(22) Date of filing: 15.03.2005
(51) Int. Cl.: F01C 1/356, F01C 11/00, F01C 13/04, F01C 19/08, F01C 21/04, F04C 18/356, F04C 27/00, F16J 15/18, F16J 15/447

(54) **ROTARY TYPE EXPANSION MACHINE**

(30) Priority: 16.03.2004 JP 2004074454
(71) Applicant: DAIKIN INDUSTRIES, LTD., Kita-ku, Osaka 530-8323 (JP)
(72) Inventor: OKAMOTO, Masakazu, c/o Daikin Industries, Ltd., Sakai-shi, Osaka 5918511 (JP); MORIWAKI, Michio, c/o Daikin Industries, Ltd., Sakai-shi, Osaka 5918511 (JP); KUMAKURA, Eiji, c/o Daikin Industries, Ltd., Sakai-shi, Osaka 5918511 (JP); OKAMOTO, Tetsuya, c/o Daikin Industries, Ltd., Sakai-shi, Osaka 5918511 (JP); SAKITANI, Katsumi, c/o Daikin Industries, Ltd., Sakai-shi, Osaka 5918511 (JP)
(74) Representative: Goddar, Heinz J.
(86) International application number: PCT/JP2005/004502
(87) International publication number: WO 2005/088079

(57) **Abstract**

The upper and lower end surfaces **(67b, 67c)** of a rotary piston **(67)** have annular sealing grooves **(91)** formed along the circular end surfaces **(67b, 67c),** respectively. An annular lip seal **(92)** is fitted in each sealing groove **(91).** Thus, lubricating oil fed through an oil feeding channel **(49)** in a shaft **(40)** does not substantially flow into a fluid chamber **(65)** in a cylinder **(63)** from clearances formed by the upper and lower end surface **(67b, 67c)** of the rotary piston **(67),** the rear head **(62)** and the front head **(61).** This eliminates shortage of lubricating oil.

## Description

### Technical Field

This invention relates to rotary expanders and particularly relates to preventive measures against oil discharge.

### Background Art

Positive displacement expanders including rotary expanders are conventionally known as expanders for generating power by expansion of high-pressure fluid. Such a rotary expander is disclosed, for example, in Published Japanese Patent Application No. 2003-172244.

The above rotary expander comprises an expansion mechanism that includes a cylinder closed at both ends by front and rear heads and a piston placed in the cylinder. The expansion mechanism is passed through by a shaft having an eccentric part rotatably fitted in the piston. In the rotary expander, lubricating oil is pumped up by an oil pump associated with the shaft and fed to the expansion mechanism to lubricate it.

### - Problems to Be Solved -

In the above known rotary expander, however, excessive feeding of lubricant oil to the expansion mechanism may cause a problem that the lubricating oil excessively leaks into the expansion chamber in the cylinder through between an end surface of the piston and the front head or rear head. This may in turn create a problem that the lubricating oil leaks out of the expander together with refrigerant, i.e., causes a so-called oil discharge, resulting in shortage of lubricating oil.

The present invention has been made in view of the above points and, therefore, its object is to prevent excessive flow of lubricating oil into the expansion chamber in the expansion mechanism to eliminate the problem of shortage of lubricating oil, thereby enhancing reliability.

### Disclosure of the Invention

The solutions taken by the present invention are as follows.

Specifically, the first solution of the invention is directed to a rotary expander comprising an expansion mechanism **(60)** that includes a cylinder **(63)** closed at both ends by closing members **(61, 62)** and a rotary piston **(67)** placed in the cylinder **(63).** Further, at lease one of the end surfaces of the rotary piston **(67)** is provided with a sealing mechanism **(90)** for sealing the end surfaces with respect to the closing members **(61, 62).**

In the above solution, if both the end surfaces of the rotary piston **(67)** are provided with sealing mechanisms **(90),** respectively, the lubricating oil fed to the sliding areas of the expansion mechanism **(60)** can be prevented from excessively leaking into the expansion space in the cylinder **(63)** through between both the end surfaces of the rotary piston **(67)** and the closing members **(61, 62).** Also, if one end surface of the rotary piston **(67)** is provided with a sealing mechanism **(90),** the one end surface undergoes a higher pressure than the pressure of the lubricating oil acting on the other end surface provided with no sealing mechanism **(90),** so that the rotary piston **(67)** is pushed toward the closing member **(61, 62)** associated with no sealing mechanism **(90)** and then brought into substantially close contact with it. Thus, like the case where both the end surfaces are provided with sealing mechanisms **(90),** the lubricating oil can be prevented from excessively leaking into the expansion space in the cylinder **(63)** through between both the end surfaces of the rotary piston **(67)** and the closing members **(61, 62).** Therefore, in either case, the lubricating oil does not substantially flow out of the expansion mechanism **(60)** together with the fluid in the expansion space, which prevents oil discharge and in turn eliminates shortage of lubricating oil.

The second solution of the invention is directed to the first solution, wherein the rotary expander further comprises a single rotary shaft **(40)** having an eccentric part **(41)** rotatably fitted in the rotary piston **(67).** Further, the rotary shaft **(40)** is formed with an oil feeding channel **(49)** for feeding lubricating oil to at least sliding areas formed by the eccentric part **(41)** and the closing members **(61, 62)** and a sliding area between the rotary piston **(67)** and the eccentric part **(41).**

The above solution restrains leakage of lubricating oil fed through the oil feeding channel **(49)** in the rotary shaft **(40)** to at least the sliding areas formed by the eccentric part **(41)** and the closing members **(61, 62)** and the sliding area between the rotary piston **(67)** and the eccentric part **(41).**

The third solution of the invention is directed to the second solution, wherein the expansion mechanism **(60)** includes a plurality of rotary pistons **(75, 85).** The rotary pistons **(75, 85)** are connected to each other through the single rotary shaft **(40)** and juxtaposed so that the adjacent end surfaces of the rotary pistons **(75, 85)** face each other with an intermediate partition plate interposed therebetween. Further, out of the end surfaces of the plurality of rotary pistons **(75, 85),** the end surfaces facing the closing members **(61, 62)** are individually provided with the sealing mechanisms **(90).**

According to the above solution, in each rotary piston (75, **85),** the end surface facing the closing member **(61, 62)** undergoes a higher pressure than the pressure of the lubricating oil acting on the other end surface facing the intermediate partition plate **(64),** so that the rotary piston **(75, 85)** is pushed toward the intermediate partition plate **(64)** and then brought into substantially close contact with it. Thus, even in the multi-cylinder type expansion mechanism **(60),** there is no possibility that during operation of the rotary pistons **(75, 85)** the sealing mechanisms **(90)** are overlapped with the through hole for the rotary shaft **(40)** formed in the intermediate partition plate **(64)** and thereby damaged. This restrains leakage of lubricating oil.

The fourth solution of the invention is directed to any one of the first to third solutions, wherein the sealing mechanism **(90)** is constituted by a sealing groove (91) formed in the end surface of the rotary piston **(67)** and a sealing member **(92)** fitted in the sealing groove **(91).**

According to the above solution, the end surface of the rotary piston **(67)** is sealed with respect to the closing member **(61, 62)** through close contact of the sealing member **(92)** with the closing member **(61, 62)** and the sealing groove **(91).**

The fifth solution of the invention is directed to the fourth solution, wherein the sealing member **(92)** is a lip seal or a chip seal.

According to the above solution, the lip seal or the chip seal comes into close contact with the closing member **(61, 62)** and the sealing groove **(91)** by the action of pressure of the lubricating oil. Thus, the end surface of the rotary piston **(67)** is sealed with respect to the closing member **(61, 62).**

The sixth solution of the invention is directed to any one of the first to third solutions, wherein the sealing mechanism **(90)** is a labyrinth seal.

According to the above solution, the end surface of the rotary piston **(67)** is sealed with respect to the closing member **(61, 62)** by a labyrinth effect derived as from a frictional effect due to viscosity of the lubricating oil and a contraction effect at a throttling gap.

The seventh solution of the invention is directed to the fourth or fifth solution, wherein the sealing member **(92)** is made of ethylene tetrafluoride-based (PTFE-based) resin material.

According to the above solution, since the ethylene tetrafluoride-based resin material is a material having excellent abrasion resistance and heat resistance, the end surface of the rotary piston **(67)** is surely sealed with respect to the closing member **(61, 62).**

The eighth solution of the invention is directed to any one of the first to seventh solutions, wherein the fit tolerance of the rotary piston **(67)** in the axial direction of the rotary shaft **(40)** is set at a size of 1/5000 to 1/1000 of the inner diameter D of the cylinder **(63).**

According to the above solution, there is no need to strictly manage the processing precision and the assembly precision of the rotary piston **(67),** which provides cost reduction.

### - Effects -

According to the first solution, since at least one end surface of the rotary piston (67) is provided with a sealing mechanism **(90)** for sealing the end surface with respect to the closing members **(61, 62),** this restrains the lubricating oil fed to the sliding areas of the expansion mechanism **(60)** from leaking into the expansion space. Thus, the lubricating oil does not substantially flow out of the expansion mechanism **(60)** together with expanded fluid, which prevents oil discharge and in turn shortage of lubricating oil. As a result, the reliability of the rotary expander can be enhanced.

Furthermore, particularly, if the rotary expander is integrated with a compressor to form a so-called high-pressure dome type expander and used, for example, in a refrigerant circuit operating in a vapor compression refrigeration cycle, the lubricating oil is heated by high-temperature and high-pressure gas refrigerant to reach high temperature and the refrigerant flowing into the expansion mechanism **(60)** has relatively low temperature. In this case, since, as described above, the leakage of lubricating oil into the expansion space is restrained, this hinders the low-temperature refrigerant from being mixed with the high-temperature lubricating oil and thereby heated, thereby preventing heat loss in the course of expansion. As a result, the operation efficiency can be enhanced.

According to the second solution, even in the expansion mechanism **(60)** having a lubrication system for feeding the lubricating oil through the oil feeding channel **(49)** formed in the rotary shaft **(40),** the lubricating oil can be restrained from leakage into the expansion space.

According to the third solution, since in the multi-cylinder type expansion mechanism **(60)** the sealing mechanisms **(90)** are provided not at the end surfaces of the rotary pistons **(75, 85)** facing the intermediate partition plate **(64)** but at the end surfaces thereof facing the closing members **(61, 62),** there is no possibility that during operation the sealing mechanisms **(90)** are overlapped with the through hole for the rotary shaft **(40)** relatively widely formed in the intermediate partition plate **(64)** and damaged. This restrains leakage of lubricating oil.

According to the fourth solution, since the sealing mechanism **(90)** is constituted by a sealing groove **(91)** and a sealing member **(92)** fitted in the sealing groove **(91),** the end surface of the rotary piston **(67)** can be sealed with respect to the closing member **(61, 62)** through close contact of the sealing member **(92)** with the closing member **(61, 62)** and the sealing groove **(91).**

According to the fifth solution, since the sealing member **(92)** is a lip seal or a chip seal, the lip seal or the chip seal can be surely brought into close contact with the closing member **(61, 62)** and the sealing groove **(91)** by the action of pressure of the lubricating oil. Thus, the end surface of the rotary piston **(67)** can be surely sealed with respect to the closing member **(61, 62).**

According to the sixth solution, since the sealing mechanism **(90)** is a labyrinth seal, the end surface of the rotary piston **(67)** can be surely sealed with respect to the closing member **(61, 62)** by a labyrinth effect.

According to the seventh solution, since the sealing member **(92)** is made of ethylene tetrafluoride-based resin material having excellent abrasion resistance and heat resistance, high sealing performance can be ensured even during its sliding on the closing members **(61, 62)** owing to the rotation of the rotary piston **(67).**

### Brief Description of Drawings

[Fig. **1]** Figure **1** is a piping diagram showing an air conditioner.
[Fig. **2]** Figure **2** is a longitudinal cross-sectional view showing a compression/expansion unit in Embodiment 1.
[Fig. **3]** Figure **3** is a horizontal cross-sectional view schematically showing essential parts of an expansion mechanism in Embodiment 1.
[Fig. **4]** Figure **4** is a longitudinal cross-sectional view schematically showing essential parts of the expansion mechanism in Embodiment 1.
[Fig. **5]** Figure **5** illustrates horizontal cross-sectional views showing the states of the expansion mechanism in Embodiment 1 at every 90° of rotation angle of a rotary shaft, wherein a sealing mechanism is not given.
[Fig. **6]** Figure **6** is a horizontal cross-sectional view schematically showing essential parts of an expansion mechanism in Embodiment 2.
[Fig. **7]** Figure **7** is a longitudinal cross-sectional view schematically showing essential parts of the expansion mechanism in Embodiment 2.
[Fig. **8]** Figure **8** is a horizontal cross-sectional view schematically showing essential parts of an expansion mechanism in Embodiment 3.
[Fig. **9]** Figure **9** is a horizontal cross-sectional view schematically showing essential parts of an expansion mechanism in Embodiment 4.
[Fig. **10]** Figure **10** is a horizontal cross-sectional view schematically showing essential parts of an expansion mechanism in Embodiment 5.
[Fig. **11]** Figure **11** is a longitudinal cross-sectional view schematically showing essential parts of the expansion mechanism in Embodiment 5.
[Fig. **12]** Figure **12** is a longitudinal cross-sectional view showing a compression/expansion unit in Embodiment 6.

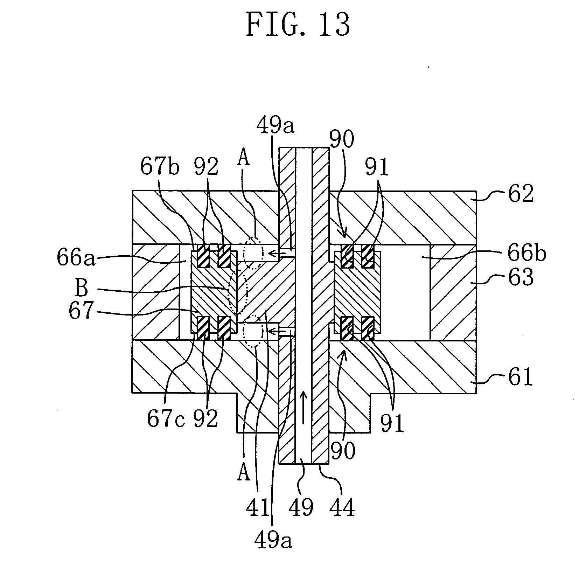

[Fig. 13] Figure **13** is a longitudinal cross-sectional view schematically showing essential parts of an expansion mechanism in another embodiment.

### Best Mode for Carrying Out the Invention

Embodiments of the present invention will be described in detail with reference to the drawings.

### <<Embodiment 1 of the Invention>>

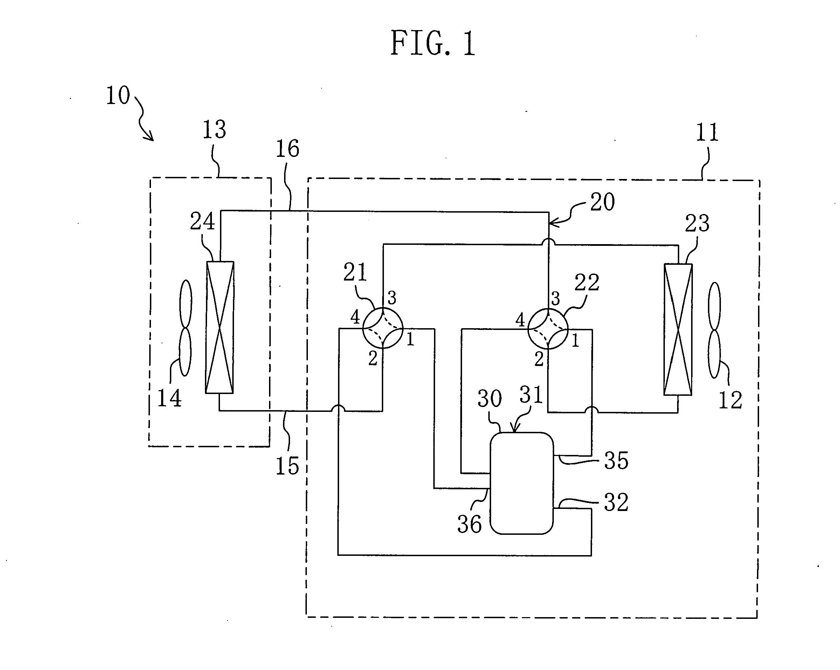

A description is given of Embodiment 1 of the present invention. As shown in Figure **1,** the air conditioner **(10)** in this embodiment includes a rotary expander according to the present invention.

### <Overall Structure of Air-conditioner>

As shown in Figure **1,** the air conditioner **(10)** is of so-called separate type and includes an outdoor machine **(11)** and an indoor machine **(13).** The outdoor machine **(11)** contains an outdoor fan **(12),** an outdoor heat exchanger **(23),** a first four-way selector valve **(21),** a second four-way selector valve **(22)** and a compression/expansion unit **(30).** On the other hand, the indoor machine **(13)** contains an indoor fan **(14)** and an indoor heat exchanger **(24).** The outdoor machine (11) is installed outside the room while the indoor machine (13) is installed in the room. The outdoor machine **(11)** and indoor machine **(13)** are connected through a pair of connection pipes **(15, 16).** The details of the compression/expansion unit **(30)** will be given later.

The air conditioner **(10)** is provided with a refrigerant circuit **(20).** The refrigerant circuit **(20)** is a closed circuit in which the compression/expansion unit **(30)** and the indoor heat exchanger **(24)** are connected. The refrigerant circuit **(20)** is filled with carbon dioxide (CO₂) as a refrigerant.

The outdoor heat exchanger **(23)** and the indoor heat exchanger **(24)** are each formed of a cross fin type fin-and-tube heat exchanger. In the outdoor heat exchanger **(23),** the refrigerant circulating through the refrigerant circuit **(20)** exchanges heat with the outdoor air. In the indoor heat exchanger **(24),** the refrigerant circulating through the refrigerant circuit **(20)** exchanges heat with the room air.

The first four-way selector valve **(21)** has four ports. The first four-way selector valve **(21)** is connected at the first port to a discharge pipe **(36)** of the compression/expansion unit **(30),** connected at the second port to one end of the indoor heat exchanger **(24)** through the connection pipe **(15),** connected at the third port to one end of the outdoor heat exchanger **(23)** and connected at the fourth port to a suction port **(32)** of the compression/expansion unit **(30).** Furthermore, the first four-way selector valve **(21)** switches between a position in which the first and second ports communicate with each other and the third and fourth ports communicate with each other (the position shown in the solid lines in Figure **1)** and a position in which the first and third ports communicate with each other and the second and fourth ports communicate with each other (the position shown in the broken lines in Figure **1).**

The second four-way selector valve **(22)** has four ports. The second four-way selector valve **(22)** is connected at the first port to an outlet port **(35)** of the compression/expansion unit **(30),** connected at the second port to the other end of the outdoor heat exchanger **(23),** connected at the third port to the other end of the indoor heat exchanger **(24)** through the connection pipe **(16)** and connected at the fourth port to an inlet port **(34)** of the compression/expansion unit **(30).** Furthermore, the second four-way selector valve **(22)** switches between a position in which the first and second ports communicate with each other and the third and fourth ports communicate with each other (the position shown in the solid lines in Figure **1)** and a position in which the first and third ports communicate with each other and the second and fourth ports communicate with each other (the position shown in the broken lines in Figure **1).**

### <Structure of Compression/expansion Unit>

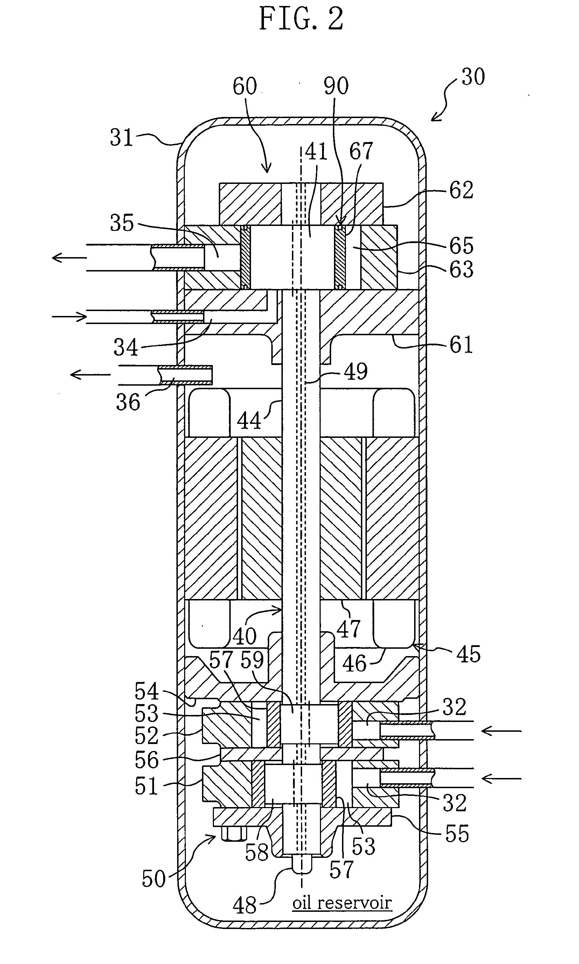

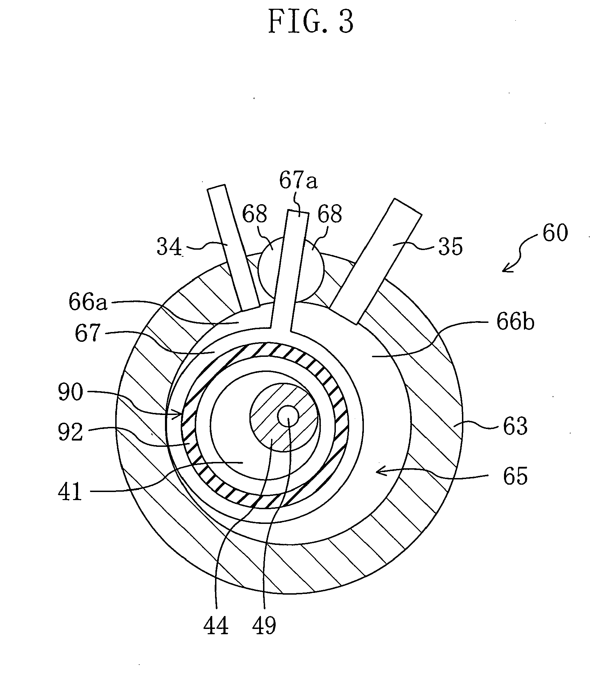

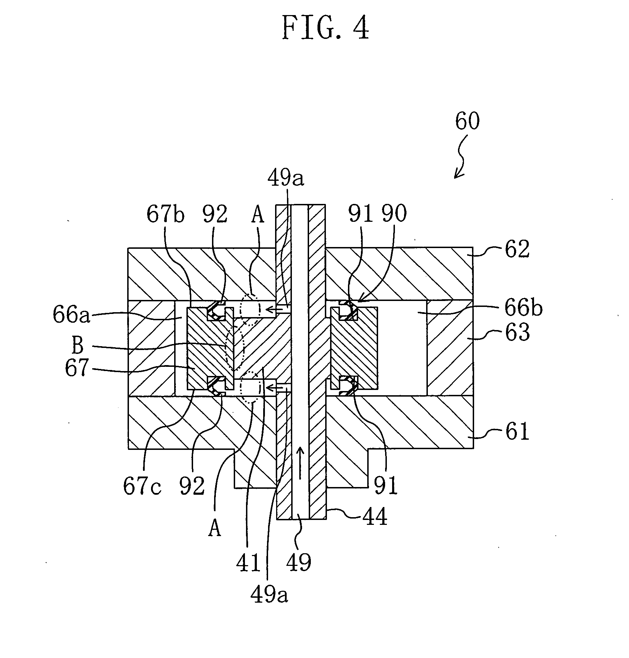

As shown in Figures **2** to **4,** the compression/expansion unit **(30)** includes a casing **(31)** that is a vertically long, cylindrical, enclosed container. Arranged inside the casing **(31)** are a compression mechanism **(50),** an electric motor **(45)** and an expansion mechanism **(60)** in order from bottom to top.

The discharge pipe **(36)** is attached to the casing **(31).** The discharge pipe **(36)** is located between the electric motor **(45)** and the expansion mechanism **(60)** and communicated with the inner space of the casing **(31).**

The electric motor **(45)** is disposed inside a longitudinally middle portion of the casing **(31).** The electric motor **(45)** is formed of a stator **(46)** and a rotor **(47).** The stator **(46)** is fixed to the casing **(31).** The rotor **(47)** is placed inside the stator **(46)** and concentrically passed through by a main spindle **(44)** of a shaft **(40).** The shaft **(40)** constitutes a rotary shaft and has two lower eccentric parts **(58, 59)** formed at its lower end and a single large-diameter eccentric part **(41)** formed at its upper end.

The two lower eccentric parts **(58, 59)** are formed to have a larger diameter than the main spindle **(44)** and to be eccentric with respect to the axis of the main spindle **(44),** the lower of them constitutes a first lower eccentric part **(58)** and the upper constitutes a second lower eccentric part **(59).** The first lower eccentric part **(58)** and the second lower eccentric part **(59)** have opposite directions of eccentricity with respect to the axis of the main spindle **(44).**

The large-diameter eccentric part **(41)** is formed to have a larger diameter than the main spindle **(44)** and to be eccentric with respect to the axis of the main spindle **(44).**

The compression mechanism **(50)** is constituted by a oscillating piston type rotary compressor. The compression mechanism **(50)** includes two cylinders **(51, 52)** and two pistons **(57).** In the compression mechanism **(50),** a rear head **(55),** the first cylinder **(51),** an intermediate plate **(56),** the second cylinder **(52)** and a front head **(54)** are stacked in order from bottom to top.

In the inside of each of the first cylinder **(51)** and the second cylinder **(52),** a single cylindrical rotary piston **(57)** is disposed. Though not shown, a tabular blade extends from the side surface of the rotary piston **(57)** and is supported through a rolling bush to the associated cylinder **(51, 52).** The rotary piston **(57)** in the first cylinder **(51)** engages with the first lower eccentric part **(58)** of the shaft **(40).** On the other hand, the rotary piston **(57)** in the second cylinder **(52)** engages with the second lower eccentric part **(59)** of the shaft **(40).** Each of the rotary pistons **(57, 57)** slides with its inner periphery on the outer periphery of the associated lower eccentric part **(58, 59)** and slides with its outer periphery on the inner periphery of the associated cylinder **(51, 52).** Thus, a compression chamber **(53)** is defined between the outer periphery of each of the rotary pistons **(57, 57)** and the inner periphery of the associated cylinder **(51, 52).**

The first cylinder **(51)** and the second cylinder **(52)** are formed with single suction ports **(32),** respectively. Each suction port **(32)** radially passes through the associated cylinder **(51, 52)** and opens at the distal end into the inside of the cylinder **(51, 52).** Further, each suction port **(32)** is extended through a pipe to the outside of the casing **(31).**

The front head **(54)** and the rear head **(55)** are formed with single discharge ports, respectively. The discharge port in the front head **(54)** brings the compression chamber **(53)** in the second cylinder **(52)** into communication with the inner space of the casing **(31).** The discharge port in the rear head **(55)** brings the compression chamber **(53)** in the first cylinder **(51)** into communication with the inner space of the casing **(31).** Further, each discharge port is provided at the distal end with a discharge valve formed of a lead valve and configured to be opened and closed by the discharge valve. In Figure 2, the discharge ports and discharge valves are not given. Gas refrigerant discharged from the compression mechanism **(50)** into the inner space of the casing **(31)** passes through the discharge pipe **(36)** and is sent out of the compression/expansion unit **(30).**

The bottom part of the casing **(31)** forms an oil reservoir for reserving lubricating oil. At the lower end of the shaft **(40),** a centrifugal oil pump **(48)** is disposed which is immersed in the oil reservoir. The oil pump **(48)** is configured to pump up the lubricating oil in the oil reservoir using the rotation of the shaft **(40).** The shaft **(40)** has an oil feeding channel **(49)** formed inside thereof to extend from its lower end to its upper end. The oil feeding channel **(49)** is configured to supply the lubricating oil pumped up by the oil pump **(48)** to sliding areas of the compression mechanism **(50)** and the expansion mechanism **(60).**

The expansion mechanism **(60)** is of so-called oscillating piston type and constitutes a rotary expander according to the present invention. The expansion mechanism **(60)** includes a front head **(61),** a rear head **(62),** a cylinder **(63)** and a rotary piston **(67).** Further, the expansion mechanism **(60)** is provided with the inlet port **(34)** and the outlet port **(35)**.

In the expansion mechanism **(60),** the front head **(61),** the cylinder **(63)** and the rear head **(62)** are stacked in order from bottom to top. The cylinder **(63)** is closed at the lower end surface by the front head **(61)** and closed at the upper end surface by the rear head **(62).** In other words, the front head **(61)** and the rear head **(62)** form closing members for the cylinder **(63).**

The shaft **(40)** passes through the stacked front head **(61),** cylinder **(63)** and rear head **(62)** and its large-diameter eccentric part **(41)** is located inside the cylinder **(63).**

The rotary piston **(67)** is contained in the cylinder **(63)** closed at both the upper and lower ends. The rotary piston **(67)** is formed in an annular or cylindrical shape and its inner diameter is approximately equal to the outer diameter of the large-diameter eccentric part **(41).** The large-diameter eccentric part **(41)** is rotatably fitted in the rotary piston **(67)** so that the inner periphery of the rotary piston **(67)** substantially entirely comes into sliding contact with the outer periphery of the large-diameter eccentric part **(41).**

The rotary piston **(67)** comes at the outer periphery into sliding contact with the inner periphery of the cylinder **(63)** and comes at the upper end surface **(67b)** and the lower end surface **(67c)** into sliding contact with the rear head **(62)** and the front head **(61),** respectively. In the cylinder **(63),** its inner periphery defines a fluid chamber **(65)** together with the outer periphery of the rotary piston **(67).**

The rotary piston **(67)** is integrally formed with a blade **(67a).** The blade **(67a)** is formed into a plate extending radially from the rotary piston **(67)** and extends outward from the outer periphery of the rotary piston **(67).** The fluid chamber **(65)** in the cylinder **(63)** is partitioned by the blade **(67a)** into a high-pressure chamber **(66a)** of relatively high pressure and a low-pressure chamber **(66b)** of relatively low pressure.

The cylinder **(63)** is provided with a pair of bushes (68). Each bush (68) is formed in the shape of a half moon so that its inside surface is plane and its outside surface is arcuate. The pair of bushes **(68)** are fitted in the cylinder wall with the blade **(67a)** sandwiched therebetween. The bush **(68)** slides with the inside surface on the blade **(67a)** and slides with the outside surface on the cylinder **(63).** The blade **(67a)** integral with the rotary piston **(67)** is supported through the bush **(68)** to the cylinder **(63)** and configured to be free to angularly move about, extend into and retract from the cylinder **(63).**

The inlet port **(34)** is formed in the front head **(61)** and opens at the downstream end into the inside surface of the front head **(61)** to communicate with the high-pressure chamber **(66a).** On the other hand, the outlet port **(35)** is formed in the cylinder **(63)** and opens at the upstream end into the inner periphery of the cylinder **(63)** to communicate with the low-pressure chamber **(66b).**

The oil feeding channel **(49)** in the shaft **(40)** is provided with narrow channels **(49a)** for feeding oil to each of sliding areas **(A, B)** of the expansion mechanism **(60).** The narrow channels **(49a)** are formed mainly for the purpose of feeding oil to the sliding areas **(A)** formed by both the end surfaces of the large-diameter eccentric part **(41),** the rear head **(62)** and the front head **(61)** and the sliding area **(B)** between the outer periphery of the large-diameter eccentric part **(41)** and the inner periphery of the rotary piston **(67).**

At the upper and lower end surfaces **(67b, 67c)** of the rotary piston **(67),** sealing mechanisms **(90)** are provided for sealing the end surfaces with respect to the rear head **(62)** and the front head **(61).** Each sealing mechanism **(90)** includes a sealing groove **(91)** and a sealing member **(92)** fitted in the sealing groove **(91).**

The sealing grooves **(91)** are individually formed in the upper end surface **(67b)** and the lower end surface **(67c)** of the rotary piston **(67).** Each sealing groove **(91)** has a cross section of a recessed shape and is formed annularly in plan view, i.e., along the entire circumference of each end surface **(67b, 67c)** of the rotary piston **(67).**

The sealing member **(92)** is constituted by a lip seal that is a mechanical seal. The lip seal **(92)** is formed in the cross section of substantially C-shape opening inwardly and in a continuous round shape in plan view. Thus, the lip seal **(92)** is fitted in the sealing groove **(91)** so that its opening faces toward the shaft **(40).**

Furthermore, the lip seal **(92)** is made of ethylene tetrafluoride-based (PTFE-based) resin material. The ethylene tetrafluoride-based resin material is a material obtained by adding a filler, such as glass fibers or carbon fibers, to a pure ethylene tetrafluoride (PTFE) resin. Since the ethylene tetrafluoride-based resin material is a material having excellent abrasion resistance and heat resistance, this ensures a high sealing performance.

According to the sealing mechanism **(90),** when each of the sliding areas **(A, B)** is excessively lubricated, the lubricating oil gets into the lip seals **(92)** through their openings and the attendant action of pressure of the lubricating oil expands the openings of the lip seals **(92).** When the openings of the lip seals **(92)** expand, the lip seals (92) come into close contact with the front head **(61)** and rear head **(62)** and also come into close contact with the bottoms of the sealing grooves **(91),** thereby sealing the upper and lower end surfaces **(67b, 67c)** of the rotary piston **(67)** with respect to the rear head **(62)** and the front head **(61).** This substantially prevents the lubricating oil fed to each sliding area **(A, B)** from leaking into the fluid chamber **(65)** of the cylinder **(63).**

Each of the clearance between the upper end surface **(67b)** of the rotary piston **(67)** and the rear head **(62)** and the clearance between the lower end surface **(67c)** thereof and the front head **(61)** is set at a size of 1/10000 to 1/2000 of the inner diameter of the cylinder **(63).** In other words, the fit tolerance of the rotary piston **(67)** in the axial direction of the shaft **(67)** is set at a size of 1/5000 to 1/1000 of the inner diameter of the cylinder **(63).** This means that since the sealing mechanism **(90)** described above provides seals of both the upper and lower end surfaces **(67b, 67c)** of the rotary piston **(67)** with respect to the front head **(61)** and the rear head **(62),** there is no need to leave such a small clearance as conventionally done between the upper end surface **(67b)** of the rotary piston **(67)** and the rear head **(62)** and between the lower end surface **(67c)** thereof and the front head **(61).** Therefore, there is no need to strictly manage the processing precision and assembly precision of the rotary piston **(67),** which provides cost reduction.

### - Operational Behaviors -

Next, a description is given of the behaviors of the air conditioner **(10).** Here, the description is given first of the behavior of the air conditioner **(10)** in cooling operation, then of the behavior thereof in heating operation and then the behavior of the expansion mechanism **(60).**

### <Cooling Operation>

In cooling operation, the first four-way selector valve **(21)** and the second four-way selector valve **(22)** are switched to the positions shown in the broken lines in Figure **1.** When in these positions the electric motor **(45)** of the compression/expansion unit **(30)** is energized, refrigerant circulates through the refrigerant circuit **(20)** to operate in a vapor compression refrigeration cycle.

The refrigerant compressed by the compression mechanism **(50)** is discharged through the discharge pipe **(36)** out of the compression/expansion unit **(30).** In this state, the refrigerant pressure becomes higher than the critical pressure. The discharged refrigerant passes through the first four-way selector valve **(21)** and is sent to the outdoor heat exchanger **(23).** In the outdoor heat exchanger **(23),** the refrigerant having flowed therein releases heat to the outdoor air.

The refrigerant having released heat in the outdoor heat exchanger **(23)** passes through the second four-way selector valve **(22)** and flows through the inlet port **(34)** into the expansion mechanism **(60)** of the compression/expansion unit **(30).** In the expansion mechanism **(60),** high-pressure refrigerant expands whereby its internal energy is converted to the rotational power of the shaft **(40).** The low-pressure refrigerant obtained by expansion flows through the outlet port **(35)** out of the compression/expansion unit **(30),** passes through the second four-way selector valve **(22)** and is sent to the indoor heat exchanger **(24).**

In the indoor heat exchanger **(24),** the refrigerant having flowed therein takes heat from the room air to evaporate, thereby cooling the room air. The low-pressure gas refrigerant having flowed out of the indoor heat exchanger **(24)** passes through the first four-way selector valve **(21)** and is sucked through the suction port **(32)** into the compression mechanism **(50)** of the compression/expansion unit **(30).** Then, the compression mechanism **(50)** compresses the sucked refrigerant again and discharges it.

### <Heating Operation>

In heating operation, the first four-way selector valve **(21)** and the second four-way selector valve **(22)** are switched to the positions shown in the solid lines in Figure **1.** When in these positions the electric motor **(45)** of the compression/expansion unit **(30)** is energized, refrigerant circulates through the refrigerant circuit **(20)** to operate in a vapor compression refrigeration cycle.

The refrigerant compressed by the compression mechanism **(50)** is discharged through the discharge pipe **(36)** out of the compression/expansion unit **(30).** In this state, the refrigerant pressure becomes higher than the critical pressure. The discharged refrigerant passes through the first four-way selector valve **(21)** and is sent to the indoor heat exchanger **(24).** In the indoor heat exchanger **(24),** the refrigerant having flowed therein releases heat to the room air to heat the room air.

The refrigerant having released heat in the indoor heat exchanger **(24)** passes through the second four-way selector valve **(22)** and flows through the inlet port **(34)** into the expansion mechanism **(60)** of the compression/expansion unit **(30).** In the expansion mechanism **(60),** high-pressure refrigerant expands whereby its internal energy is converted to the rotational power of the shaft **(40).** The low-pressure refrigerant obtained by expansion flows through the outlet port **(35)** out of the compression/expansion unit **(30),** passes through the second four-way selector valve **(22)** and is sent to the outdoor heat exchanger **(23).**

In the outdoor heat exchanger **(23),** the refrigerant having flowed therein takes heat from the outdoor air to evaporate. The low-pressure gas refrigerant having flowed out of the outdoor heat exchanger **(23)** passes through the first four-way selector valve **(21)** and is sucked through the suction port **(32)** into the compression mechanism **(50)** of the compression/expansion unit **(30).** Then, the compression mechanism **(50)** compresses the sucked refrigerant again and discharges it.

### <Behavior of Expansion Mechanism>

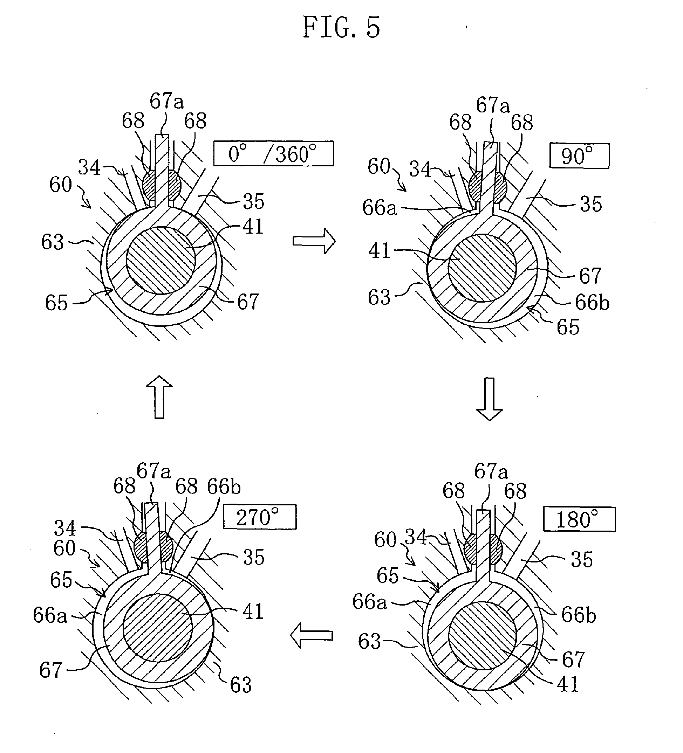

A description is given of the behavior of the expansion mechanism (60) with reference to Figure **5.** When supercritical high-pressure refrigerant flows into the high-pressure chamber **(66a)** of the expansion mechanism **(60),** the shaft **(40)** rotates counterclockwise as viewed in diagrams of Figure **5.**

At an angle of rotation of 0° of the shaft **(40),** the downstream end of the inlet port **(34)** is closed by the end surface of the large-diameter eccentric part **(41).** When the shaft **(40)** rotates slightly from this state, the inlet port **(34)** communicates with the high-pressure chamber **(66a)** so that high-pressure refrigerant begins to flow into the high-pressure chamber **(66a).** Then, as the angle of rotation of the shaft **(40)** gradually increases to 90°, 180° and 270°, the volume of the first high-pressure chamber **(73)** gradually increases. When the angle of rotation of the shaft **(40)** reaches approximately 360°, the inlet port **(34)** is closed again by the end surface of the large-diameter eccentric part **(41)** so that the flow of the high-pressure refrigerant into the high-pressure chamber **(66a)** is shut off.

Next, when the angle of rotation of the shaft **(40)** reaches 0° again, the low-pressure chamber **(66b)** communicates with the outlet port **(35)** so that the refrigerant begins to flow out of the low-pressure chamber **(66b).** Then, as the angle of rotation of the shaft **(40)** gradually increases to 90°, 180° and 270°, the volume of the low-pressure chamber **(66b)** gradually decreases and, during the time, the refrigerant continues to flow out through the outlet port **(35).** Then, when the angle of rotation of the shaft **(40)** reaches approximately 360°, the outlet port **(35)** is closed by the rotary piston **(67)** so that the flow of refrigerant from the low-pressure chamber **(66b)** is shut off. At the time, the pressure difference between the high-pressure chamber **(66a)** and the low-pressure chamber **(66b)** causes the rotary piston **(67)** and the shaft **(40)** to drive into rotation.

During operation of the expansion mechanism **(60),** the rotation of the shaft **(40)** causes the lubricating oil in the oil reservoir to be fed through the oil feeding channel **(49)** to the sliding areas of the expansion mechanism **(60).** Even if during the time the sliding areas in the expansion mechanism **(60)** are excessively lubricated through the narrow channels **(49a)** to produce an excess of lubricating oil, the sealing mechanisms **(90)** restrains the flow of the excessive lubricating oil into the fluid chamber **(65).** This substantially eliminates that the lubricating oil mixes with the refrigerant in the fluid chamber **(65)** and flows through the outlet port **(35)** out of the compression/expansion unit **(30)** together with the refrigerant. As a result, the oil discharge to the refrigerant circuit **(20)** can be prevented thereby preventing the performance deterioration of each heat exchanger **(23, 24).**

Furthermore, since the compression/expansion unit **(30)** in this embodiment includes the compression mechanism **(50)** and is formed as a high-pressure dome type, the lubricating oil in the oil reservoir is heated by high-temperature and high-pressure gas refrigerant discharged from the compression mechanism **(50).** Therefore, the lubricating oil fed to the expansion mechanism **(60)** reaches relatively high temperature. On the other hand, since the refrigerant circuit **(20)** operates in a vapor compression refrigeration cycle, refrigerant flowing into the expansion mechanism **(60)** has relatively low temperature. In the expansion mechanism **(60),** the sealing mechanisms **(90)** restrain the lubricating oil from flowing into the fluid chamber **(65)** and, in turn, low-temperature refrigerant in the fluid chamber **(65)** is not mixed with the high-temperature refrigerant and heated up. Therefore, heat loss in the course of expansion can be prevented.

Furthermore, since the lip seal **(92)** is made of ethylene tetrafluoride-based resin material having excellent abrasion resistance and heat resistance, it ensures a high sealing performance even when sliding on the front head **(61)** or the rear head **(62)** owing to the rotation of the rotary piston **(67).**

### - Effects of Embodiment -

As described so far, since in Embodiment 1 the upper and lower end surfaces **(67b, 67c)** of the rotary piston **(67)** are provided with sealing mechanisms **(90)** for sealing them with respect to the front head **(61)** and the rear head **(62),** this restrains the lubricating oil fed to each sliding area **(A, B)** of the expansion mechanism **(60)** from leaking into the fluid chamber **(65).** Thus, it can be substantially avoided that the lubricating oil flows out of the compression/expansion unit **(30)** together with the refrigerant. Therefore, the oil discharge to the refrigerant circuit **(20)** can be prevented, the shortage of lubricating oil in the expansion mechanism **(60)** can be eliminated and the performance degradation of each heat exchanger **(23, 24)** can be prevented. As a result, the reliability of the rotary expander can be enhanced.

Particularly, in the high-pressure dome type compression/expansion unit **(30),** the lubricating oil in the oil reservoir has relatively high temperature. On the other hand, in the refrigerant circuit **(20)** operating in a vapor compression refrigeration cycle, the refrigerant flowing into to the expansion mechanism **(60)** has relatively low temperature. As described above, since the above embodiment restrains the leakage of lubricating oil into the fluid chamber **(65)** and in turn prevents that the low-temperature refrigerant is mixed with the high-temperature lubricating oil and thereby heated up, heat loss in the course of expansion can be prevented. As a result, the operation efficiency can be enhanced.

Furthermore, since the lip seals **(92)** are used as the sealing members, the openings of the lip seals **(92)** can be expanded by the action of pressure of the lubricating oil, thereby surely bringing the lip seals **(92)** into close contact with the front head **(61),** the rear head **(62)** and the sealing grooves **(91).** This surely provides seals of the upper and lower end surfaces **(67b, 67c)** of the rotary piston **(67)** with respect to the front head **(61)** and the rear head **(62).**

Moreover, since the lip seals **(92)** are made of ethylene tetrafluoride-based resin material having excellent abrasion resistance and heat resistance, it ensures a high sealing performance even when sliding on the front head **(61)** or the rear head **(62)** owing to the rotation of the rotary piston **(67).**

Furthermore, since the fit tolerance of the rotary piston **(67)** in the axial direction of the shaft **(40)** is set at a size of 1/5000 to 1/1000 of the inner diameter of the cylinder **(63),** this eliminates the need to strictly manage the processing precision and assembly precision of the rotary piston **(67),** which provides cost reduction.

### <<Embodiment 2 of the Invention>>

Next, Embodiment 2 of the present invention is described with reference to the drawings.

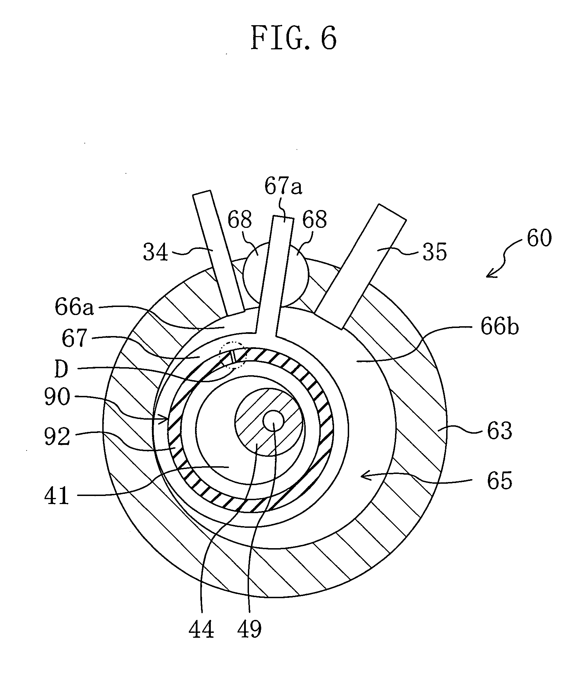

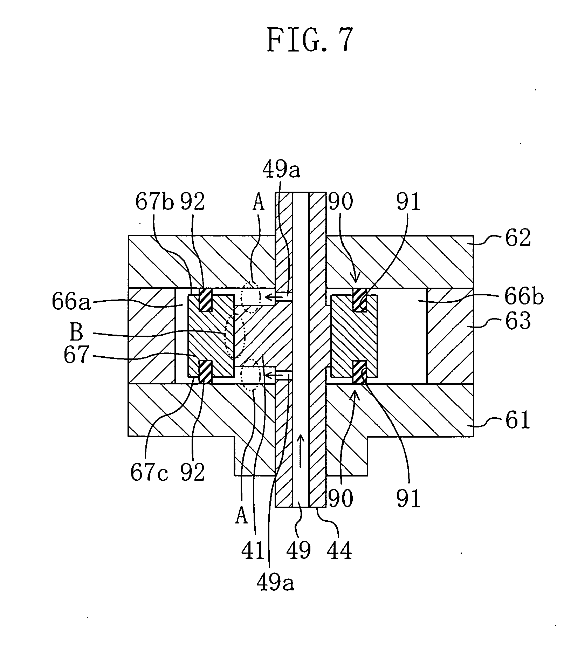

As shown in Figures **6** and **7,** Embodiment 2 employs chip seals as the sealing members **(92)** instead of lip seals used in Embodiment 1. Specifically, in this embodiment, the sealing mechanism **(90)** is constituted by a sealing groove **(91)** formed in each of the upper and lower end surfaces **(67b, 67c)** of the rotary piston **(67)** and a chip seal **(92)** fitted in the sealing groove **(91).**

More specifically, the chip seal **(92)** is a mechanical seal and is made of metal such as copper. The chip seal **(92)** is formed in a rectangular cross section and in a discontinuous round shape in plan view. In other words, the chip seal **(92)** is cut radially at a single point on the circumference (see the point **D** in Figure **6).** This cutting is done in order to fit the chip seal **(92)** being given a tension into the sealing groove **(91)** and thereby bias the chip seal **(92)** radially outwardly after the fitting.

If in this case each sliding area **(A, B)** is excessively lubricated, the pressure of the lubricating oil acts on the inner peripheries of the chip seals **(92).** By the action of the pressure of the lubricating oil, the chip seals **(92)** entirely slightly rise up and are concurrently pushed outward to come into close contact with the front head **(61)** and the rear head **(62)** and the outer peripheries of the sealing grooves **(91).** Thus, the upper and lower end surfaces **(67b, 67c)** of the rotary piston **(67)** are sealed with respect to the rear head **(62)** and the front head **(61),** respectively. The other configurations, behaviors and effects are the same as in Embodiment 1.

Though in this embodiment the chip seals **(92)** are made of metal, they may be made of ethylene tetrafluoride-based resin material like Embodiment 1. In this case, the chip seals **(92)** are formed in a continuous round shape without being cut.

### <<Embodiment 3 of the Invention>>

Next, Embodiment 3 of the present invention is described with reference to the drawing.

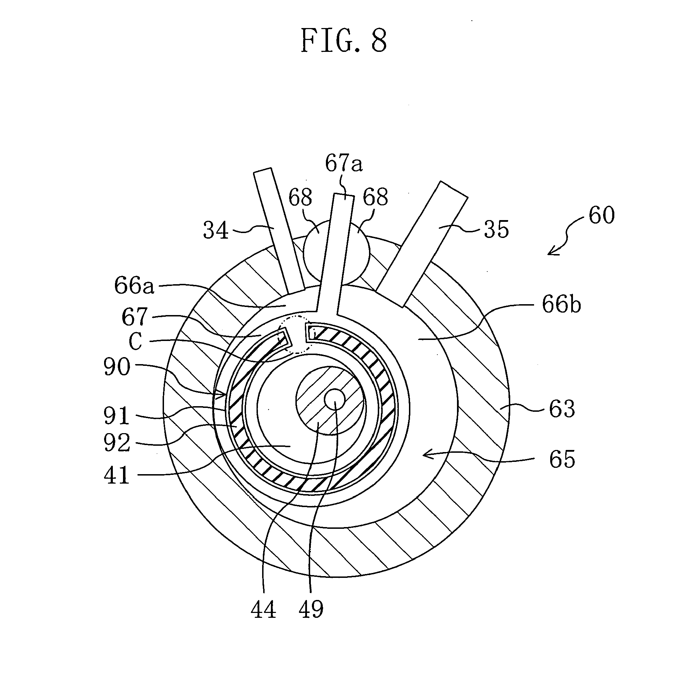

In Embodiment 3, as shown in Figure **8,** the sealing grooves **(91)** and the chip seals **(92)** differ in shape from those in Embodiment 2. Specifically, each sealing groove **(91)** is formed in a C shape that the annular sealing groove **(91)** in Embodiment 2 is discontinued at one point. Likewise, each chip seal **(92)** is formed, in plan view, in a C shape corresponding to the sealing groove **(91).** In addition, each sealing groove **(91)** is formed to present a part **(C)** corresponding to the opening of the C shape to the high-pressure chamber **(66a)** of the fluid chamber **(65).**

In the above case, the end surfaces **(67b, 67c)** of the rotary piston **(67)** will not be sealed at their parts **(C)** each corresponding to the opening of the C shape with respect to the front head **(61)** and the rear head **(62).** Since, however, the high-pressure chamber **(66a)** has substantially the same pressure as the inside areas of the chip seals **(92),** this restrains the lubricating oil from leaking into the high-pressure chamber **(66a),** i.e., the fluid chamber **(65).**

Furthermore, since the sealing grooves **(91)** are formed in C shape, this prevents the chip seals **(92)** from moving circumferentially in the sealing grooves **(91)** owing to sliding resulting from the rotation of the shaft **(40).** Thus, the parts **(C)** each corresponding to the opening of the C shape are always presented to the high-pressure chamber **(66a),** which surely restrains the leakage of lubricating oil into the fluid chamber **(65).** The other configurations, behaviors and effects are the same as in Embodiment 2.

### <<Embodiment 4 of the Invention>>

Next, Embodiment 4 of the present invention is described with reference to the drawing.

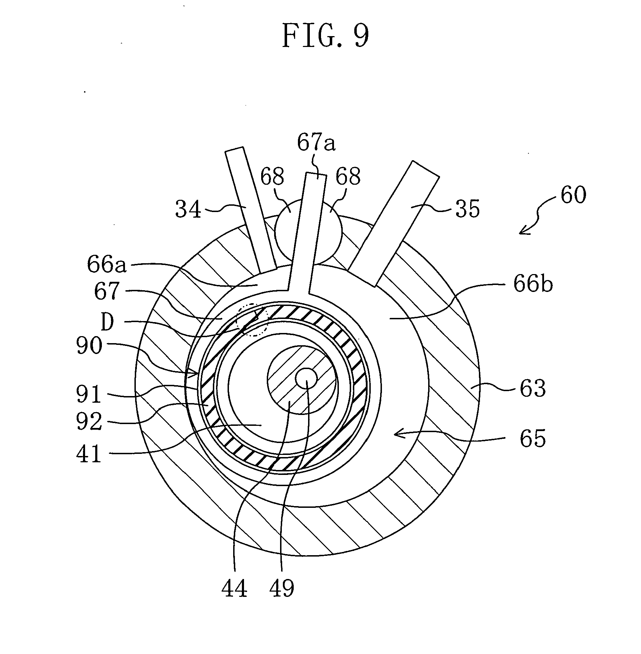

In Embodiment 4, as shown in Figure **9,** the chip seals **(92)** differ in cutting manner from those in Embodiment 2. Specifically, while in Embodiment 2 the chip seals **(92)** are cut radially and linearly at one point, the chip seals **(92)** in this embodiment are cut in steps at one point (see the part **D).** In other words, each chip seal **(92)** in this embodiment has an overlap interval at the cut part **(D).**

In the above case, even when the chip seal **(92)** move circumferentially in the sealing groove **(91)** owing to sliding resulting from the rotation of the shaft **(40),** the provision of the overlap interval holds the cut surfaces of the cut part **(D)** into contact with each other, i.e., against apart from each other. This restrains the leakage of lubricating oil into the fluid chamber **(65).** The other configurations, behaviors and effects are the same as in Embodiment 2.

Though in this embodiment the chip seals **(92)** are cut in steps, they may be cut linearly obliquely with respect to the radial direction. In other words, the chip seals **(92)** may be cut to taper the cut profile. To sum up, any cutting manner will do if it creates an overlap interval at the cut part **(D).**

### <<Embodiment 5 of the Invention>>

Next, Embodiment 5 of the present invention is described with reference to the drawings.

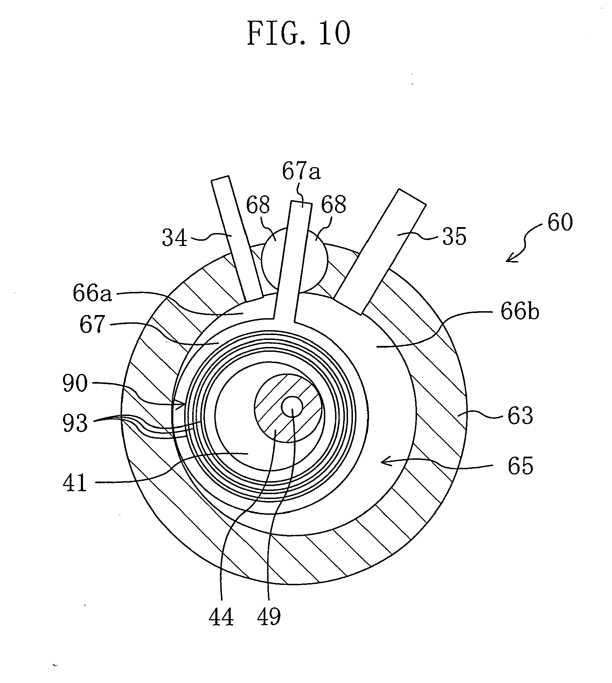

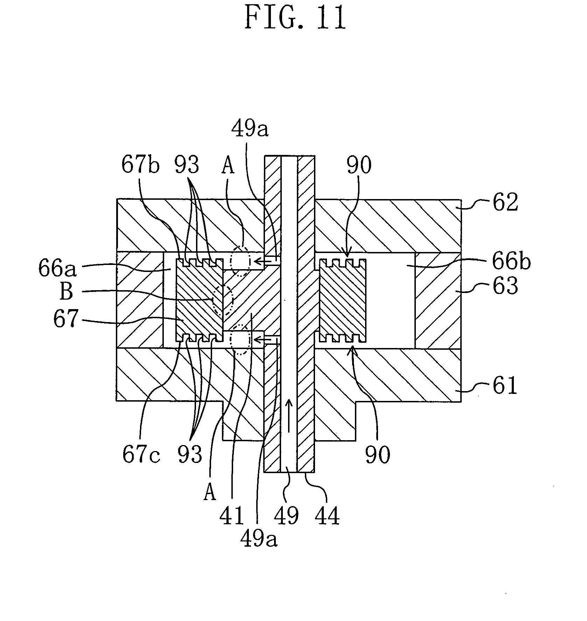

In stead of the sealing mechanism **(90)** in Embodiment 1 constituted by a sealing groove **(91)** and a sealing member **(92),** the sealing mechanism **(90)** in Embodiment 5 is, as shown in Figures **10** and **11,** constituted by only a plurality of sealing grooves **(93).** In other words, the sealing mechanism **(90)** in this embodiment is formed in a labyrinth seal.

Specifically, the labyrinth seal **(90)** is constituted by three sealing grooves **(93).** The sealing grooves **(93)** are formed in a set of three for each of the upper and lower end surfaces **(67b, 67c)** of the rotary piston **(67).** The set of three sealing grooves **(93)** have a similar shape to the sealing groove **(91)** in Embodiment 1 and are formed with different diameters from one another, i.e., triply in the radial direction of the rotary piston **(67).**

The labyrinth seal **(90)** provides a labyrinth effect derived as from a frictional effect due to the viscosity of the lubricating oil and a contraction effect at a throttling gap, thereby sealing the upper and lower end surfaces **(67b, 67c)** of the rotary piston **(67)** with respect to the rear head **(62)** and the front head **(61),** respectively. In this case, the sealing members **(92)** themselves and in turn the assembly of the sealing members **(92)** can be dispensed with, which provides cost reduction. The other configurations, behaviors and effects are the same as in Embodiment 1.

Though in this embodiment the labyrinth seal **(90)** is constituted by three sealing grooves **(93)** and the sealing grooves **(93)** have a rectangular profile, the number and profile of sealing grooves are not limited to the above. In other words, any number and profile of sealing grooves are applicable so long as they can provide a labyrinth effect.

### <<Embodiment 6 of the Invention>>

Next, Embodiment 6 of the present invention is described with reference to the drawing.

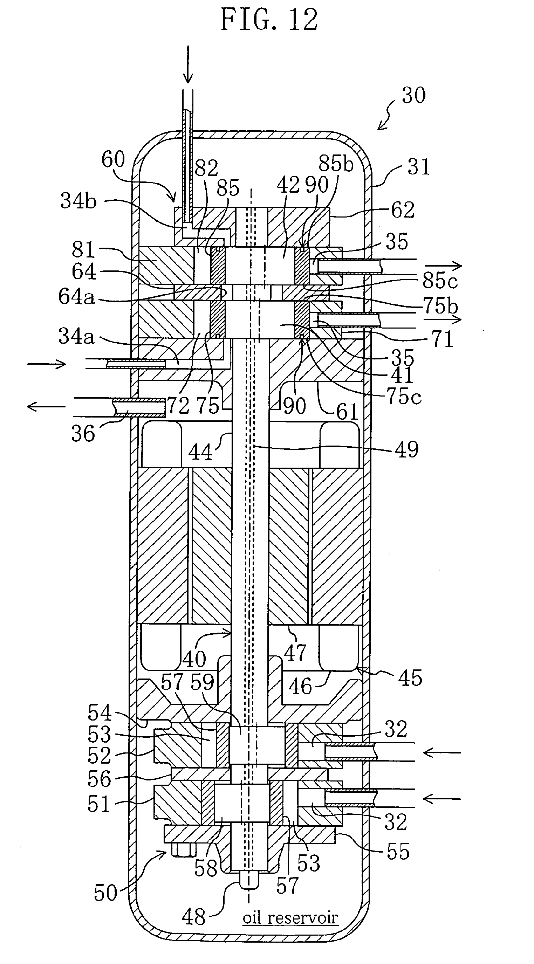

In Embodiment 6, as shown in Figure **12,** the structure of the expansion mechanism **(60)** and the placement of the sealing mechanisms **(90)** differ from those in Embodiment 1. In other words, though the expansion mechanism **(60)** in Embodiment 1 is of so-called single cylinder type, the expansion mechanism **(60)** in this embodiment is of double cylinder type.

Specifically, the shaft **(40)** is formed at its upper end with two large-diameter eccentric parts **(41, 42).** The lower of the two large-diameter eccentric parts **(41, 42)** constitutes a first large-diameter eccentric part **(41)** and the upper constitutes a second large-diameter eccentric part **(42).** The first large-diameter eccentric part **(41)** and the second large-diameter eccentric part **(42)** have opposite directions of eccentricity with respect to the axis of the main spindle **(44).**

The expansion mechanism **(60)** includes two cylinders **(71, 72)** and two rotary pistons **(75, 85)** in two pairs and also includes a front head **(61),** an intermediate plate **(64)** and a rear head **(62).** In the expansion mechanism **(60),** the front head **(61),** the first cylinder **(71),** the intermediate plate **(64),** the second cylinder **(81)** and the rear head **(62)** are stacked in order from bottom to top. The first cylinder **(71)** is closed at the lower end surface by the front head **(61)** and closed at the upper end surface by the intermediate plate **(64).** On the other hand, the second cylinder **(81)** is closed at the lower end surface by the intermediate plate **(64)** and closed at the upper end surface by the rear head **(62).** The first cylinder **(71)** and the second cylinder **(81)** are formed to have the same inner diameter.

The shaft **(40)** passes through the stacked front head **(61),** first cylinder **(71),** intermediate plate **(64),** second cylinder **(81)** and rear head **(62).** The first large-diameter eccentric part **(41)** of the shaft **(40)** is located inside the first cylinder **(71),** while the second large-diameter eccentric part **(42)** thereof is located inside the second cylinder **(81).**

The first rotary piston **(75)** and the second rotary piston **(85)** are placed in the first cylinder **(71)** and the second cylinder **(81),** respectively. The first cylinder **(71)** and the second cylinder **(81)** are formed in an annular or cylindrical shape and have equal outer diameters. The first large-diameter eccentric part **(41)** and the second large-diameter eccentric part **(42)** are rotatably fitted in the first rotary piston **(75)** and the second rotary piston **(85),** respectively.

The first rotary piston **(75)** comes at the outer periphery into sliding contact with the inner periphery of the first cylinder **(71)** and comes at the lower end surface **(75c)** and the upper end surface **(75b)** into sliding contact with the front head **(61)** and the intermediate plate **(64),** respectively. In the first cylinder **(71),** its inner periphery defines a first fluid chamber **(72)** together with the outer periphery of the first rotary piston **(75).** On the other hand, the second rotary piston **(85)** comes at the outer periphery into sliding contact with the inner periphery of the second cylinder **(81)** and comes at the upper end surface **(85b)** and the lower end surface **(85c)** into sliding contact with the rear head **(62)** and the intermediate plate **(64),** respectively. In the second cylinder **(81),** its inner periphery defines a second fluid chamber **(82)** together with the outer periphery of the second rotary piston **(85).**

In other words, in the expansion mechanism **(60)** of this embodiment, the intermediate plate **(64)** constitutes an intermediate partition plate for separating the inner space of the first cylinder **(71)** from the inner space of the second cylinder **(81).** The rotary pistons **(75, 85)** are connected to each other through a single shaft **(40)** and juxtaposed so that the adjacent end surfaces **(75b, 85c)** of the rotary pistons **(75, 85)** face each other with the intermediate plate **(64)** interposed therebetween.

The front head **(61)** is formed with a first inlet port **(34a)** in communication with the high-pressure chamber of the first fluid chamber **(72)** and the rear head **(62)** is formed with a second inlet port **(34b)** in communication with the high-pressure chamber of the second fluid chamber **(82).** On the other hand, the cylinders **(71, 81)** are individually formed with outlet ports **(35)** in communication with the low-pressure chambers of the fluid chambers **(72, 82).**

Sealing mechanisms **(90)** are individually provided at the lower end surface **(75c)** of the first rotary piston **(75)** and the upper end surface **(85b)** of the first rotary piston **(75).** In other words, out of the end surfaces of the rotary pistons **(75, 85),** the end surfaces **(75c, 85b)** facing the front head **(61)** and the rear head **(62)** serving as closing members are each provided with the sealing mechanism **(90).** Note that the structure of each sealing mechanism **(90)** is the same as that in Embodiment 1.

In this embodiment, when each cylinder **(71, 81)** is excessively lubricated, the end surfaces **(75c, 85b)** provided with the sealing mechanism **(90)** undergo higher pressure than the pressure of the lubricating oil acting on the end surfaces **(75b, 85c)** facing the intermediate plate **(64).** Thus, the rotary pistons **(75, 85)** are pushed toward the intermediate plate **(64)** to come into substantially close contact with the intermediate plate **(64).** Consequently, the upper and lower end surfaces **(75b, 75c, 85b, 85c)** of the rotary pistons **(75, 85)** are sealed with respect to the front head **(61),** the rear head **(62)** and the intermediate plate **(64).** Since in this manner no sealing mechanism **(90)** is provided at the end surfaces **(75b, 85c)** of the rotary pistons **(75, 85)** toward the intermediate plate **(64),** the sealing performance can be ensured while the lip seals **(92)** can be prevented from being pinched into a through hole **(64a)** for the shaft **(40)** formed in the intermediate plate **(64).** The other configurations, behaviors and effects are the same as in Embodiment 1.

### <<Other Embodiments>>

The above embodiments of the present invention may have the following configurations.

For example, though in Embodiments 2 to 4 a sealing groove **(91)** and a chip seal **(92)** are provided in a single pair for each of the upper and lower end surfaces **(67b, 67c)** of the rotary piston **(67),** they may be provided in two pairs to form a double seal. In this case, the sealing performance can be further ensured.

Though in Embodiments 1 to 5 both the end surfaces **(67b, 67c)** of the rotary piston **(67)** are individually provided with sealing mechanisms **(90),** either one of them may be provided with a sealing mechanism **(90).** In this case, the same sealing effect as in Embodiment 6 can be obtained. In other words, the present invention will work if at least one of the end surfaces **(67b, 67c)** of the rotary piston **(67)** is provided with a sealing mechanisms **(90).**

It is a matter of course that in Embodiments 1 to 4 and 6 materials other than ethylene tetrafluoride-based resin material may be used as a material for the sealing member **(92).**

### Industrial Applicability

As described so far, the present invention is useful as a rotary expander for generating power by the expansion of high-pressure fluid.

## Claims

1. A rotary expander comprising an expansion mechanism **(60)** that includes a cylinder **(63)** closed at both ends by closing members **(61, 62)** and a rotary piston **(67)** placed in the cylinder **(63),**
wherein at lease one of the end surfaces of the rotary piston **(67)** is provided with a sealing mechanism **(90)** for sealing the end surfaces with respect to the closing members **(61, 62).**

2. The rotary expander of claim 1, further comprising
a single rotary shaft **(40)** having an eccentric part **(41)** rotatably fitted in the rotary piston **(67);** and
said rotary shaft **(40)** being formed with an oil feeding channel **(49)** for feeding lubricating oil to at least sliding areas formed by the eccentric part **(41)** and the closing members **(61, 62)** and a sliding area between the rotary piston **(67)** and the eccentric part **(41).**

3. The rotary expander of claim 2, wherein
the expansion mechanism **(60)** includes a plurality of rotary pistons **(75, 85),**
the rotary pistons **(75, 85)** are connected to each other through the single rotary shaft **(40)** and juxtaposed so that the adjacent end surfaces of the rotary pistons **(75, 85)** face each other with an intermediate partition plate **(64)** interposed therebetween, and
out of the end surfaces of the plurality of rotary pistons **(75, 85),** the end surfaces facing the closing members **(61, 62)** are individually provided with the sealing mechanisms **(90).**

4. The rotary expander of any one of claims 1 to 3, wherein the sealing mechanism **(90)** is constituted by a sealing groove **(91)** formed in the end surface of the rotary piston **(67)** and a sealing member **(92)** fitted in the sealing groove **(91).**

5. The rotary expander of claim 4, wherein the sealing member **(92)** is a lip seal or a chip seal.

6. The rotary expander of any one of claims 1 to 3, wherein the sealing mechanism **(90)** is a labyrinth seal.

7. The rotary expander of claim 4 or 5, wherein the sealing member **(92)** is made of ethylene tetrafluoride-based resin material.

8. The rotary expander of any one of claims 1 to 7, wherein the fit tolerance of the rotary piston **(67)** in the axial direction of the rotary shaft **(40)** is set at a size of 1/5000 to 1/1000 of the inner diameter D of the cylinder **(63).**
